# EUROPEAN PATENT SPECIFICATION

(11) **EP 0 959 590 B1**
(45) Date of publication and mention of the grant of the patent: **14.12.2005**
(21) Application number: 99303950.2
(22) Date of filing: 20.05.1999
(51) Int. Cl.: H04L 12/40, H04L 12/56, H04L 29/06

(54) **Data communication system operating at maximum data rate**
Mit maximaler Übertragungsgeschwindigkeit arbeitendes Kommunikationssystem
Système de communication opérant à débit de données maximale

(30) Priority: 22.05.1998 JP 14123998
(43) Date of publication of application: 24.11.1999
(73) Proprietor: CANON KABUSHIKI KAISHA, Tokyo (JP)
(72) Inventor: Kobayashi, Takashi, Ohta-ku, Tokyo (JP); Hatae, Shinichi, Ohta-ku, Tokyo (JP); Niida, Mitsuo, Ohta-ku, Tokyo (JP); Ohnishi, Shinji, Ohta-ku, Tokyo (JP)
(74) Representative: Beresford, Keith Denis Lewis

(56) References cited:
- EP-A- 0 637 150
- EP-A- 0 697 778
- EP-A- 0 834 815
- EP-A- 0 971 508

## Description

### BACKGROUND OF THE INVENTION

### Field of the Invention

The present invention relates to a data communication system, an apparatus and a method therefor, and a computer readable storing medium therefor, and more particularly to a system capable of high speed communication of control data and information data of plural kinds.

### Related Background Art

There is recently proposed a high-performance system which is formed by connecting electronic devices such as a personal computer (PC), peripheral equipment, AV (audio/visual) equipment etc. through digital interfaces and in which the control data of each device and information data of plural kinds (such as video data, audio data, graphic data, text data etc.), present in mixed manner on a transmission channel, are transmitted at a high speed to other devices.

Among the technologies for constituting such communication system there is known the IEEE (Institute of Electrical and Electronics Engineers, Inc.) 1394-1995 standard (hereinafter represented as IEEE 1394 standard). The IEEE 1394 standard has the following functions:
1) It has a high data transfer rate and supports plural data transfer rates (100, 200 and 400 Mbit/sec);
2) It supports a transfer method realizing real-time data transfer (isochronous transfer) and an asynchronous transfer method;
3) It allows a connection configuration (topology) of high freedom; and
4) It supports the plug-and-play function and the active line connect/disconnect function.

However, though the IEEE 1394 standard defines not only the basic configuration for realizing the above-mentioned functions but also the physical and electrical configuration of the connector and the basic transfer sequence of the above-mentioned two data transfer method, it does not define the type of information data is to be transmitted or received nor the type of communication protocol to be used in such transmission or reception.

Also as the IEEE 1394 standard supports plural different data transfer rates (100, 200 and 400 Mbit/sec), plural devices of different maximum transfer rates can be present in a single bus-type network.

However, in case of transferring the information data between two devices with a transfer rate higher than 100 Mbit/sec, the device (source) transmitting the information data has to analyze the maximum transfer rate available between the two devices prior to the start of the transfer of the information data. Therefore, at each transfer of the information data, the source has to analyze the transfer rate of the transmission path between the source and the device (destination) receiving the information data and that of all the devices present on the transmission path and identify the maximum transfer rate of the transmission path based on the result of such analysis.

Such analysis process becomes quite cumbersome particularly when many devices are connected to the communication system or when the destination is connected in a distant location on the communication system, and constitutes a significant burden to the source.

Also the IEEE 1394 standard supports the plug-and-play function and the active line connect/disconnect (hot plug) function, but the source has to execute the analysis mentioned above in case such function is generated in the course of transfer of the information data.

### SUMMARY OF THE INVENTION

A concern of the present invention is to solve the above-described drawbacks.

Another concern of the present invention is to provide, in data communication system, apparatus and method and a computer readable storing medium therefor, a technology allowing to easily detect the transfer rate available between a plurality of electronic devices without requiring complex analysis.

European Patent Specification No EP-A-0637150 discloses a mobile data communication system in which the transmitter or receiver can reduce the data transfer rate in response to changing circumstances.

European Patent Specification No EP-A-0971508 discloses a method and apparatus for transmitting data over a data bus in which the destinations are asked individually and sequentially to respond to a data packet. Thus each destination is polled individually until its capability has been determined. Thereafter a next destination is polled in a similar manner is repeatedly sent until a usable transfer rate is established for each destination.

The present invention comprises a data communication apparatus as set out in claim 1 and a data communication method as set out in claim 10.

Still other features of the present invention, and the advantages thereof, will become fully apparent from the following detailed description of the embodiments.

### BRIEF DESCRIPTION OF THE DRAWINGS

Fig. 1 is a block diagram showing an example of the communication system constituting a first embodiment;
Fig. 2 is a view showing the two transfer methods employed in the embodiment;
Fig. 3 is a block diagram showing a part of the configuration of a digital interface of the embodiment;
Fig. 4 is a sequence chart showing the communication sequence of the first embodiment;
Fig. 5 is a flow chart showing the control sequence of the first embodiment;
Fig. 6 is a sequence chart showing the communication sequence in case of a bus resetting;
Fig. 7 is a flow chart showing the communication sequence in case of a bus resetting;
Fig. 8 is a sequence chart showing another example of the communication sequence in the first embodiment;
Fig. 9 is a block diagram showing an example of the communication system constituting a second embodiment;
Fig. 10 is a sequence chart showing the communication sequence in the second embodiment;
Fig. 11 is a flow chart showing the communication sequence of the second embodiment;
Fig. 12 is a sequence chart showing the communication sequence of the second embodiment;
Fig. 13 is a flow chart showing the communication sequence of a third embodiment;
Fig. 14 is a view showing the configuration of an asynchronous broadcast packet;
Fig. 15 is a sequence chart showing the communication sequence of a fourth embodiment;
Fig. 16 is a flow chart showing the communication sequence of the fourth embodiment; and
Fig. 17 is a view showing the configuration of an asynchronous stream packet.

### DESCRIPTION OF THE PREFERRED EMBODIMENTS

The preferred embodiments of the present invention will be described in detail hereinafter with reference to the accompanying drawings.

### First embodiment

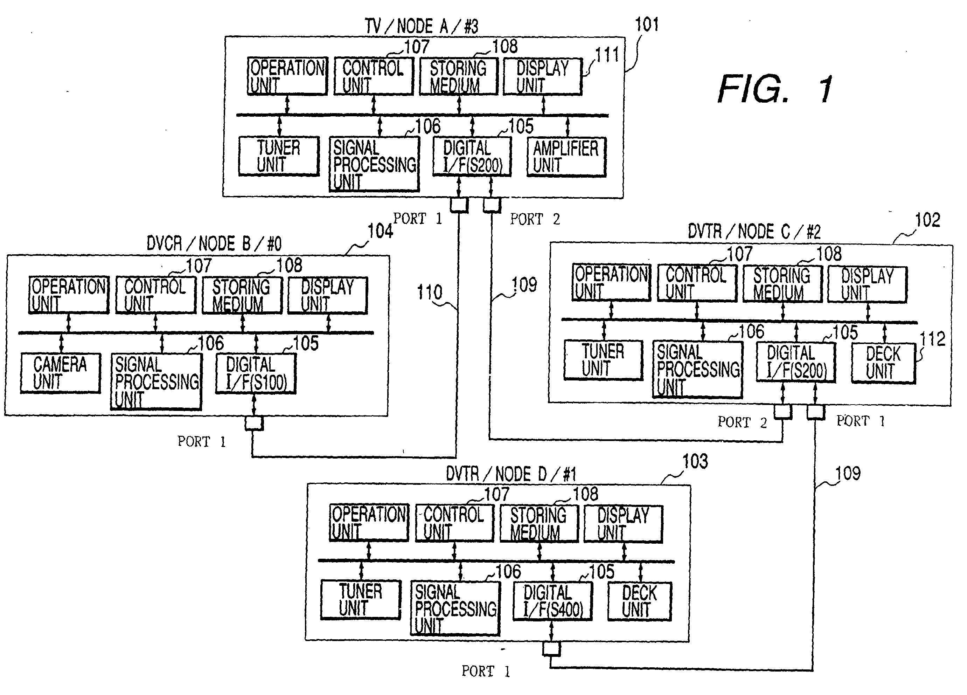

Fig. 1 shows an example of the configuration of the communication system constituting a first embodiment. The communication system shown in Fig. 1 is composed of a TV set 101, digital video tape recorders (hereinafter written as DVTR) 102, 103 and a camera-integrated digital video recorder (hereinafter written as DVCR) 104. Each device is provided with a digital interface 105 of functions based on the IEEE 1394 standard.

The digital interfaces 105 are connected through communication cables based on the IEEE 1394 standard, and each digital interface can transfer various data in serial manner. Also the digital interfaces 105 can be used to constitute a daisy chain connection or a node branched connection through the communication cables, thereby constructing a logic bus network.

The communication cable is either a 4-pin connector cable 110 consisting of two sets of shielded twisted pair cables used for transferring the information data and the arbitration signals, or a 6-pin connector cable 109 consisting of two sets of shielded twisted pair cables and a pair of power supply lines. The two sets of the twisted pair cables are used for serially transferring the data signals and strobe signals, encoded by the DS-link method.

In the following there will be explained, with reference to Fig. 1, a bus resetting procedure based on the IEEE 1394 standard.

The above-described digital interface 105 executes bus resetting by automatically detecting a change in the connection configuration, such as start of power supply in a connected device, connection of a new device or disconnection of a connected device. The bus resetting is a procedure by which each device (hereinafter called node) constituting the communication system initializes the connection configuration (hereinafter called topology) thus far recognized of the communication system and the communication addresses (hereinafter called node ID) of the devices, thus recognizing the new topology and resetting the node ID.

The bus resetting procedure will be explained briefly in the following with reference to Fig. 1. This procedure consists of a procedure of recognizing the communication system as a hierarchic topology and a procedure of giving a node ID to each device.

The recognition of topology is executed by the mutual declaration of parent-child relationship by the nodes. Each node recognizes the entire communication system as a tree-shaped structure through the determination of the parent-child relationship between the nodes. As the parent-child relationship between the nodes depends on the connection status of the communication system and the functions of each node, the topology recognized at each bus resetting is not necessarily the same.

As an example, in the communication system shown in Fig. 1, the parent-child relationship is at first set between the DVTR 103 (hereinafter called node D) and the DVTR 102 (hereinafter called node C). The parent-child relationship is then set, in succession, between the DVCR 104 (hereinafter called node B) and the TV 101 (hereinafter called node A) and between the nodes C and A.

A node finally recognized as the parent (or upper grade) of all the nodes becomes the "root node" and manages the arbitration of the bus use right in the communication system. In the communication system shown in Fig. 1, the node A becomes the root node.

After the determination of the root node, the nodes constituting the communication system automatically start the setting of the node ID's (consisting of node numbers for identifying the devices on a same bus and bus numbers for identifying plural buses).

The setting of the node ID is basically executed by a process in which a parent node permits the setting of the node ID to a child node connected to a communication port with the smallest port number and the child node in turn permits the setting of the node ID to a node constituting a child to such child node. A node having set its node ID transmits a self ID packet, thereby informing the node ID set for the node to other nodes. After the setting of the node ID's for all the child nodes, the parent node finally set its own node ID. The self ID packet contains, in addition to the node number assigned to each node, information indicating the transfer rates supported by each node and information indicating whether each communication port provided in each node is connected to a parent node or a child node.

Through the repetition of the above-described procedure, the node ID of the root node is set at last. As the node ID assigned to each node depends on the parent-child relationship of the devices, the node ID given at each bus resetting is not necessarily same.

In the following there will be explained the automatic node ID setting procedure. In the present example, there will be explained a case where the node A becomes the root node after the recognition of the topology. The communication system shown in Fig. 1 is constructed on a same bus.

Referring to Fig. 1, the node A constituting the root node at first permits the setting of the node ID to a node connected to the communication port "1", namely the node B.

The node B sets "#0" as the self node number, and broadcasts the result in a self ID packet to all the nodes constituting the communication system. The broadcasting means sending of predetermined information to unspecified plural nodes.

As a result, all the nodes recognize that "the node number "#0" has already been assigned", so that a next node having the node ID setting right sets a node number "#1".

After the node ID setting by the node B, the node A permits the node ID setting to a node connected to the communication port "2", namely the node C.

The node C in turn permits the setting in succession from the communication port of the smallest port number among the ports connected to the child nodes. Thus the permission is given to the node D, which thus sets the node number "#1" and broadcasts the self ID packet.

After the node ID setting by the node D, the node C sets "#3" as its node number. Finally the node A constituting the root node sets "#4" as its node number, and the setting procedure is terminated.

Through such sequence in the bus resetting, each node can recognize the topology of the communication system. Thus the communication addresses can be automatically set, and there can be realized the plug-and-play function and the hot plug function. Also each node can execute data communication with any desired node, by utilizing the node ID described above.

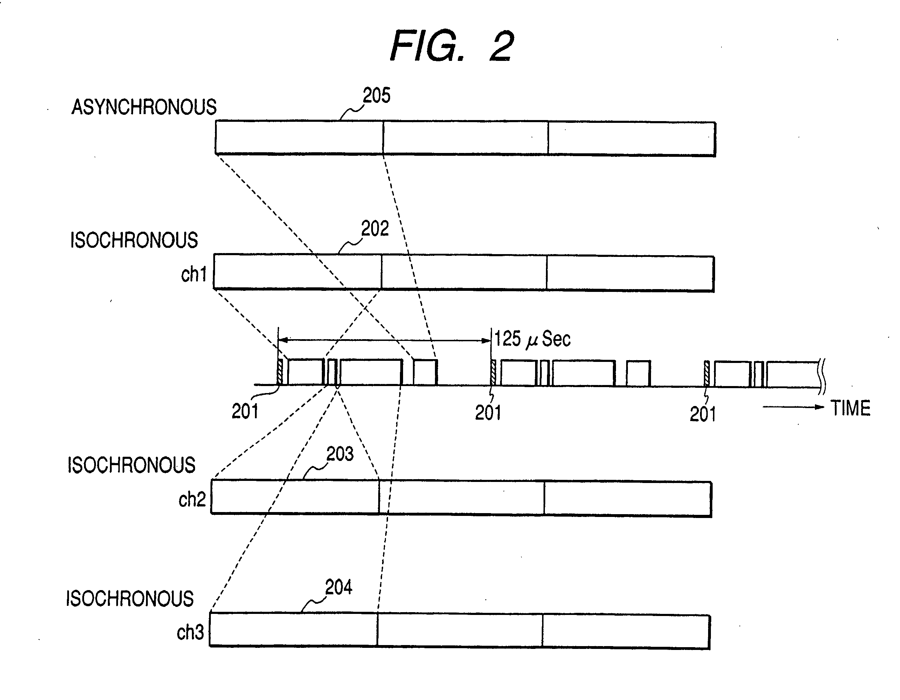

Then there will be explained, with reference to Fig. 2, the data transfer method based on the IEEE 1394 standard.

The digital interface 105 of the present embodiment can utilize the isochronous transfer mode and the asynchronous transfer mode based on the IEEE 1394 standard. The isochronous transfer mode, ensuring transmission or reception of packets of a specified amount in a communication cycle time (125 µs), is effective in real-time transmission of video data or audio data. On the other hand, the asynchronous transfer mode is effective in transmitting or receiving the control command or file data when necessitated in asynchronous manner, and has a lower priority within the communication cycle time in comparison with the isochronous transfer mode. The isochronous transfer mode is executed by a broadcasting communication which does not specify the destination. On the other hand, the asynchronous transfer mode is executed either by a communication specifying the destination by the node ID, or by a broadcasting communication specifying all the devices on the local bus as the destination.

Referring to Fig. 2, at the start of each communication cycle, there is transmitted a communication packet, called cycle start packet 201, for adjusting the cycle time measured by each node.

After the transfer of the cycle start packet 201, a predetermined period is used for the isochronous transfer mode. Each data transferred by the isochronous transfer mode can be identified by a channel number, and plural isochronous transfers can be executed on time-shared basis within a communication cycle time.

For example, in case data 202, 203, 204 to be isochronously transferred from the DVCR 104, the DVTR 102 and the TV101 are respectively given channel numbers "ch1", "ch2" and "ch3", these data can be isochronous transferred on time-shared basis within a communication cycle time.

A period after the isochronous transfer and before the transfer of a next cycle start packet 201 is used for the asynchronous transfer. In the example shown in Fig. 2, data 205 is asynchronously transferred from the DVCR 104 to the DVTR 103.

In the following there will be explained the first embodiment with reference to Fig. 1.

In the communication system shown in Fig. 1, the maximum transfer rate is 200 Mbit/sec (hereinafter represented as S200) for the digital interface 105 provided in the TV 101, 200 Mbit/sec (S200) for the digital interface 105 provided in the DVTR 102, 400 Mbit/sec (S400) for the digital interface 105 provided in the DVTR 103, and 100 Mbit/sec (S100) for the digital interface 105 provided in the DVCR 104.

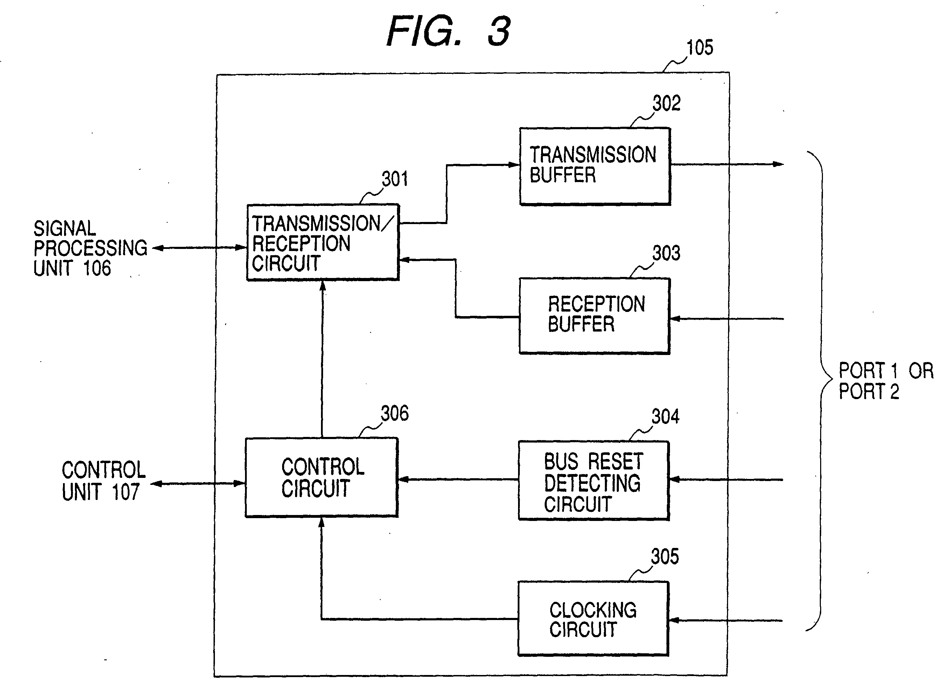

Each digital interface 105 includes a configuration shown in Fig. 3.

Referring to Fig. 3, a transmission/reception circuit 301 packetizes the information data, supplied from a signal processing unit 106 provided in each device, into a communication packet of a predetermined format. A transmission buffer 302 temporarily stores at least one transmission packet supplied from the transmission/reception circuit 301. A reception buffer 303 temporarily stores at least a communication packet received through the port 1 or 2. A bus resetting detection circuit 304 detects generation of a bus resetting, from a change in the bias voltage applied to the port 1 or 2. A timer circuit 305 measures a time substantially coinciding with that in other devices, in response to the cycle start packet 201 described in the foregoing. A control circuit 306 controls the functions of various circuits constituting the digital interface 105 and those involved in the bus resetting.

In the first embodiment, there will be explained a case in which the DVTR 103 functions as a source for transmitting the information data (including video data and audio data) to a destination and the TV 101 functions as a destination for receiving and displaying such information data on a display unit 111.

The signal processing unit 106 of the DVTR 103 divides the information data to be transmitted into at least a data segment, each containing a predetermined data amount. Each segment data is packetized, in the digital interface 105 of the DVTR 103 (more specifically the transmission/reception circuit 301 in the digital interface 105), into at least a communication packet based on the asynchronous transfer method. In the following description, the communication packet based on the asynchronous transfer method will be called the asynchronous packet.

The data amount of each segment data is variable depending on the size of the reception buffer 303, secured in the digital interface 105 of the TV 101. Also the data amount transmittable within an asynchronous packet is variable depending on the size of the transmission buffer 302 of the digital interface 105 provided in the DVTR 103.

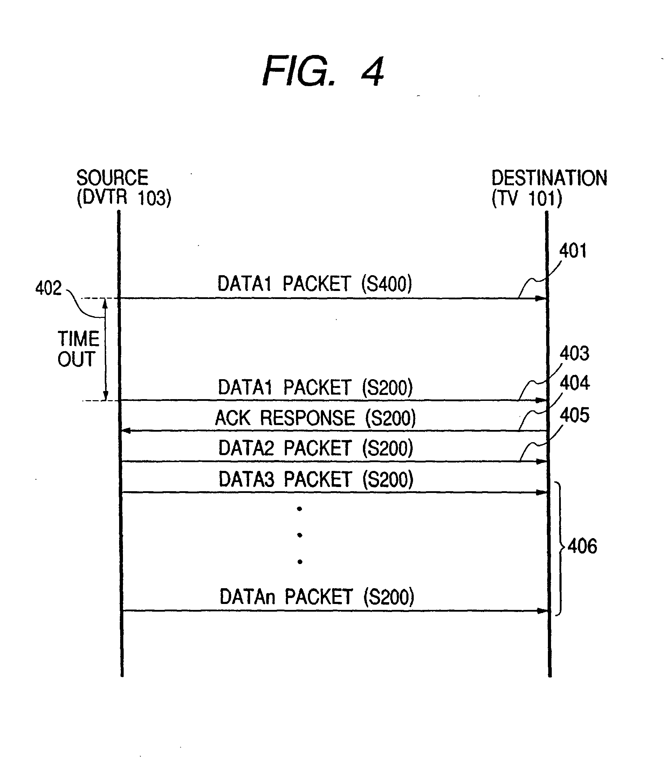

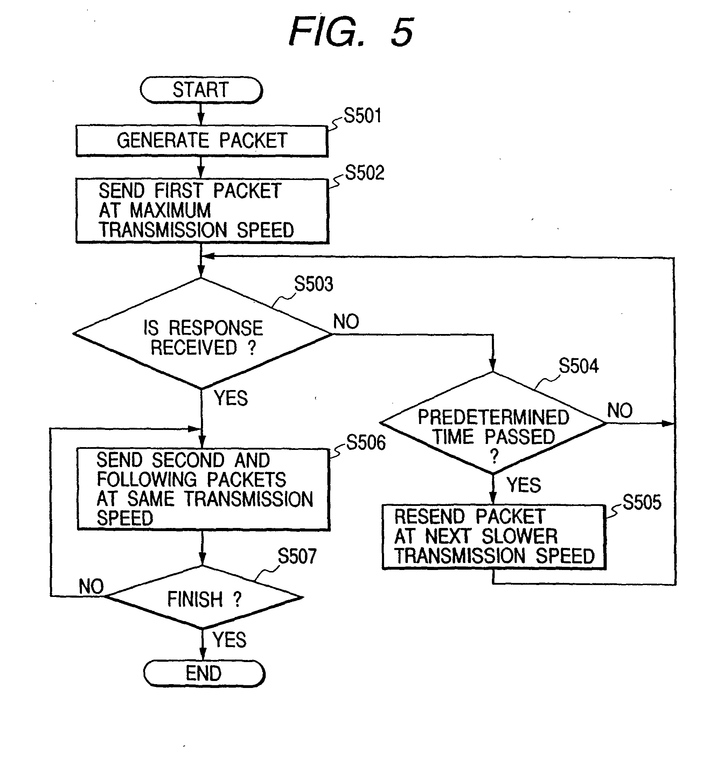

In the following there will be explained the communication sequence and the process sequence of the first embodiment with reference to Figs. 4 and 5.

Fig. 4 is a sequence chart showing the communication sequence for analyzing the maximum transfer rate of the transmission path between the DVTR 103 and a destination (TV 101). Also Fig. 5 is a flow chart showing the process sequence for analyzing the maximum transfer rate of the transmission path between the DVTR 103 and a destination (TV 101).

In a step S501, the source (DVTR 103) divides the above-mentioned information data into at least a segment data, and generates at least an asynchronous packet therefrom.

In a step S502, the digital interface 105 of the source executes asynchronous transfer of a packet to be transferred at first (DATA 1) among the at least one asynchronous packet at the maximum transfer rate (namely S400) supported by the source (sequence 401).

In steps S503 and S504, the control unit 107 of the source awaits, for a predetermined time, a response to the packet (DATA 1) (sequence 402).

In the first embodiment, the timer means for measuring the above-mentioned predetermined time is constituted by the timer circuit 305 provided in the digital interface 105. The control circuit 306 detects the presence or absence of the response within the predetermined time measured by the timer circuit 305, and supplies the control unit 107 with the result of detection.

If a response is received from the destination (TV 101) within the predetermined time, the control unit 107 of the source recognizes, in a step S506, the used transfer rate (S400) as the maximum transfer rate effective on the transmission path to the destination.

If the response is not received from the destination within the predetermined time, the digital interface 105 of the source executes, in a step S505, asynchronous transfer of the same packet (DATA 1) with a next highest transfer rate (S200) (sequence 403).

After the transmission with S200, the control unit 107 of the source again awaits, in the steps S503 and S504, the response to the transmitted packet (DATA 1).

In the first embodiment, the above-described predetermined time may be made adaptively variable according to the transfer rate, or selected same regardless of the transfer rate.

If a response from the destination (TV 101) is confirmed within the predetermined time, the control unit 107 of the source recognizes the used transfer rate (S200) as the maximum transfer rate effective on the transmission path to the destination (sequence 404).

After the recognition of the maximum transfer rate of the transmission path, the digital interface 105 of the source executes asynchronous transfer of a packet (DATA 2) to be transmitted next, at such maximum transfer rate (namely S200) (sequence 405).

Thereafter, the digital interface 105 of the source executes asynchronous transfer of the remaining packets (DATA 3 to DATA n) in succession (sequence 406). When the last of the packets constituting the information data is transmitted, the source terminates, in a step S507, the transmission of the information data.

Through such sequence, the source can easily recognize the maximum transfer rate between the source and the destination, without analyzing the transmission path to the destination and the devices present on such transmission path. Also it can execute the communication of the information data, utilizing thus recognized maximum transfer rate.

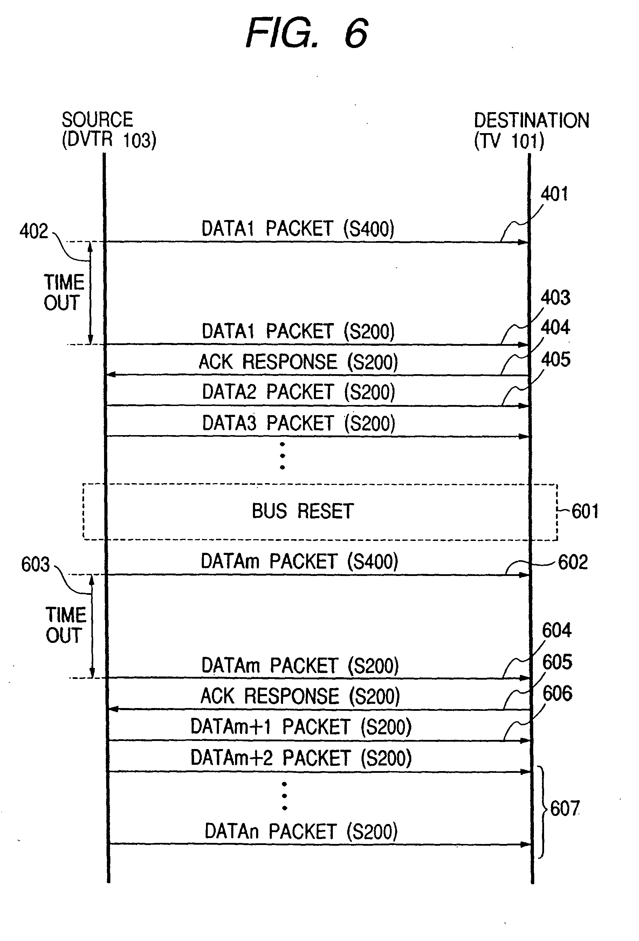

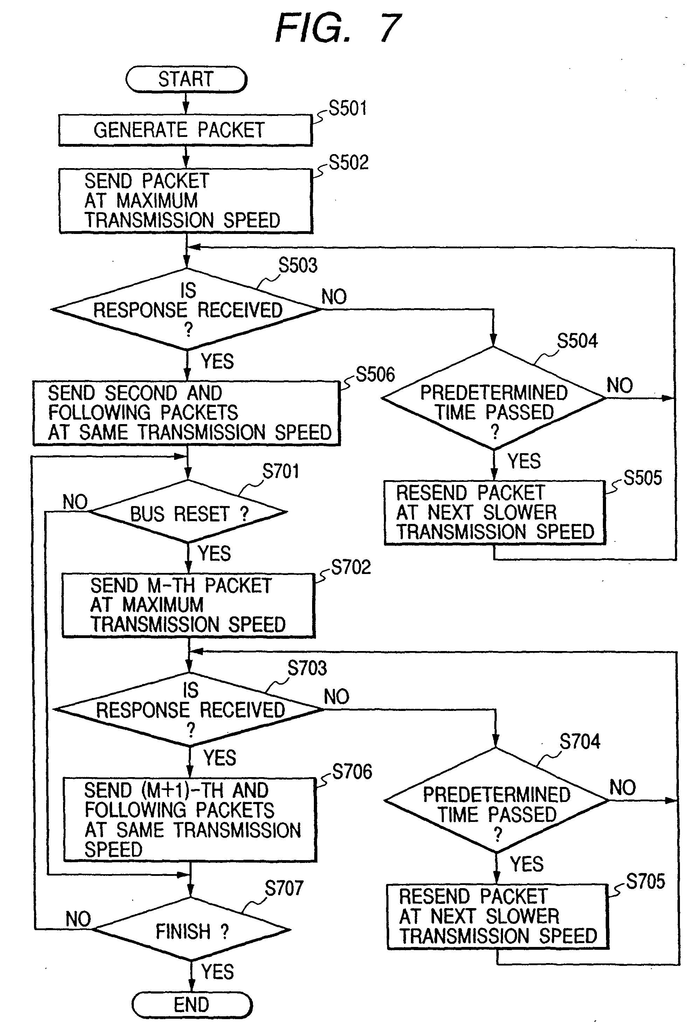

In the following there will be explained, with reference to Figs. 6 and 7, a case in which a bus resetting is generated by disconnection of the DVCR 104 from the communication system of Fig. 1 in the course of a communication between the DVTR 103 and the TV 101. In Figs. 6 and 7, steps similar in process and function to those in Figs. 4 and 5 are numbered same and will no longer be explained further.

In the sequences 401 to 405 in Fig. 4 and the steps S501 to S506 in Fig. 5, the control unit 107 of the source recognizes the maximum transfer rate on the transmission path between the source and the destination. Then the control unit 107 of the source selects such maximum transfer rate, among the plural transfer rates supported by the digital interface 105. Then the digital interface 105 of the source transmits, in succession, the plural asynchronous packets generated from an information data (containing for example video data and audio data), utilizing such maximum transfer rate.

In case a bus resetting is generated in a step S701 by disconnection of the DVCR 104 in the course of transmission of the information data, the digital interface 105 of the source interrupts the transmission of the information data, then initializes the topology and the node ID's prior to the bus resetting and executes the automatic recognition of the new topology and the node ID assignment to the nodes (sequence 601).

The generation of the bus resetting is detected by the bus resetting detection circuit 304 provided in the digital interface 105 of each device. Also the predetermined process resulting from the bus resetting is controlled and executed by the control circuit 306 provided in the digital interface 105.

When the predetermined process resulting from the bus resetting is completed to prepare for restarting of the communication, the digital interface 105 of the source executes, in a step S702, asynchronous transfer of a packet (DATA m) next to the last asynchronous packet normally received by the destination, with the maximum transfer rate (namely S400) (sequence 602).

Then, in steps S703 and S704, the control unit 107 of the source awaits a response to such packet (DATA m) for a predetermined time (sequence 603).

If a response is received from the destination (TV 101) within the predetermined time, the control unit 107 of the source recognizes, in a step S706, the used transfer rate (S400) as the maximum transfer rate effective on the transmission path to the destination.

If the response is not received from the destination within the predetermined time, the digital interface 105 of the source executes, in a step S705, asynchronous transfer of the same packet (DATA m) with a next highest transfer rate (S200) (sequence 604).

Then, in the steps S703 and S704, the control unit 107 of the source again awaits a response to such packet (DATA m) for a predetermined time.

If a response is received from the destination within the predetermined time, the control unit 107 of the source recognizes the used transfer rate (S200) as the maximum transfer rate effective on the transmission path to the destination (sequence 605).

Having recognized the maximum transfer rate of the transmission path, the digital interface 105 of the source executes asynchronous transfer of a next packet (DATA m+1) with such maximum transfer rate (S200) (sequence 606).

Thereafter, the digital interface 105 of the source executes asynchronous transfer of the remaining packets (DATA m+2 to DATA n) in succession (sequence 607). When the last of the packets constituting the information data is transmitted, the source terminates, in a step S507, the transmission of the information data.

Through such sequence, the source can easily recognize the maximum transfer rate between the source and the destination, without complex analysis even in case a bus resetting is generated in the course of transmission of the information data. Also it can restart the communication of the information data, utilizing thus recognized maximum transfer rate.

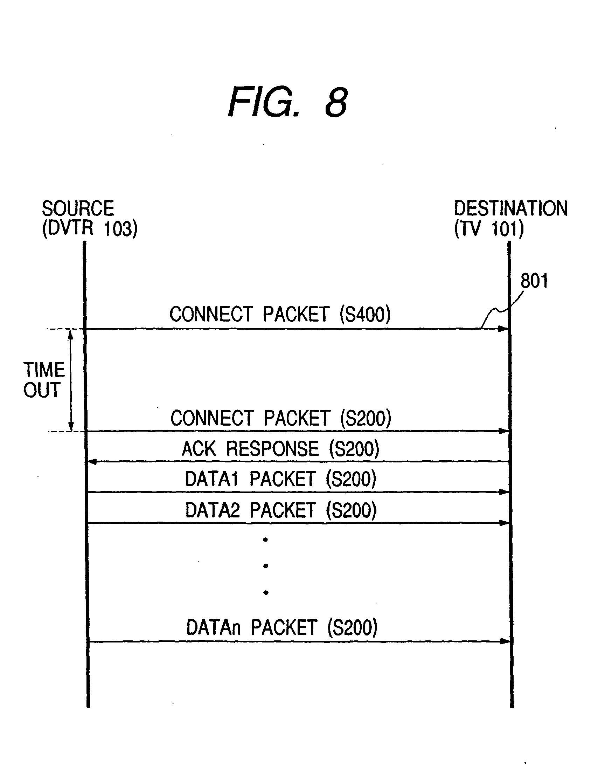

As explained in the foregoing, the first embodiment is so constructed that the maximum transfer rate on the transmission path is recognized by the first packet of the information data, but such configuration is not restrictive. It is also possible, for example as shown in Fig. 8, to transmit a connection packet 801 requesting an acknowledgement prior to the transmission of the information data consisting of n packet, and to recognize the maximum transfer rate based on the presence or absence of the response to the connection packet 801.

Also the connection packet 801 may be so constructed as to contain, for example, dummy data, a command asking the ability of the destination (for example the size of the reception buffer and the information for setting the interval of the information data transmitted in succession from the source), and data indicating the ability of the source (for example the maximum payload size of the packet to be transmitted).

As explained in the foregoing, the first embodiment of the present invention allows to easily recognize the maximum transfer rate effective on the transmission path, without requiring complex analysis.

### Second embodiment

In the first embodiment, there have been explained the procedure of identifying the maximum transfer rate between a source and a destination, and the procedure of executing the data communication between the source and the destination by the asynchronous transfer method.

In the second embodiment, there will be explained the procedure of identifying the maximum transfer rate between a source and plural destinations, and the procedure of executing the data communication between a source and plural destinations by the asynchronous transfer method.

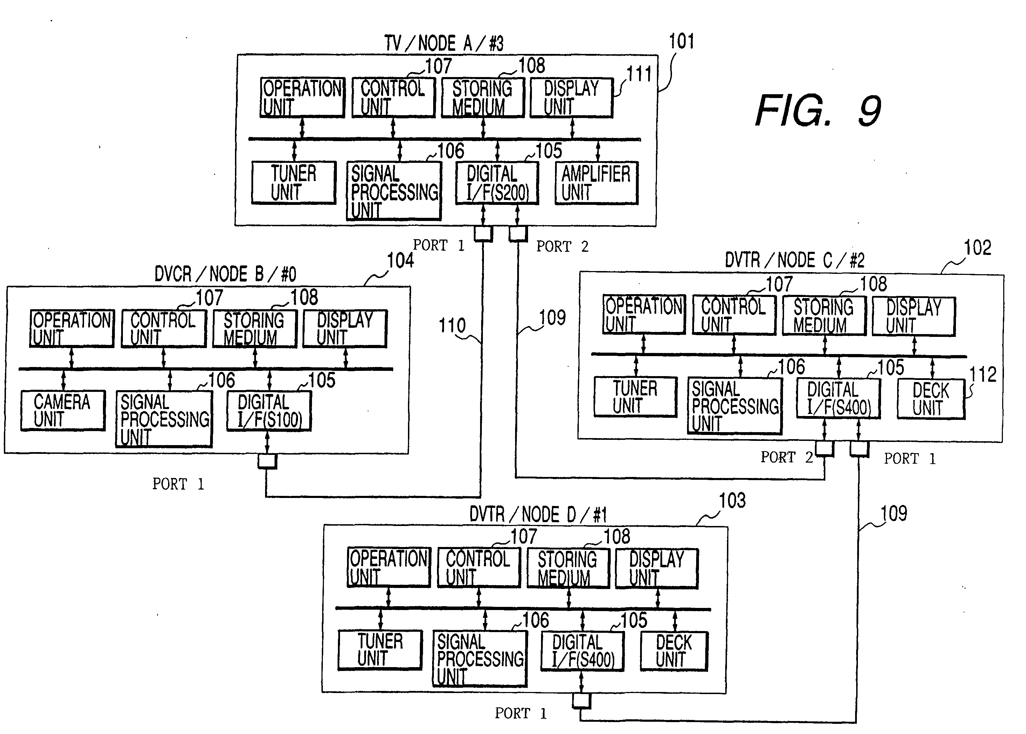

In the following the second embodiment will be explained with reference to a communication system shown in Fig. 9.

In the communication system shown in Fig. 2, the maximum transfer rate is S200 for the digital interface 105 of the TV 101, S400 for that of the DVTR 102, S400 for that of the DVTR 103, and S100 for that of the DVCR 104.

Each digital interface 105 in the second embodiment includes, as in the first embodiment, the configuration shown in Fig. 3.

In the second embodiment, there will be explained a case in which the DVTR 103 functions as a source for transmitting the information data (including video data and audio data) to plural destinations and the TV 101 functions as a first destination for receiving and displaying such information data on a display unit 111 while the DVTR 102 functions as a second destination for receiving and recording such information data on a recording medium such as a magnetic tape set in a deck unit 112.

The signal processing unit 106 of the DVTR 103 divides the information data, to be transmitted to the plural destinations, into at least a data segment, each containing a predetermined data amount. Each segment data is packetized, in the digital interface 105 of the DVTR 103 (more specifically the transmission/reception circuit 301 in the digital interface 105), into at least an asynchronous packet.

The data amount of each segment data is variable depending on the size of the reception buffer 303, secured in the destination. For example the DVTR 103 in the second embodiment determines the data amount of the segment data, matching the smallest size of the reception buffers secured in the TV 101 and the DVTR 102.

Also the data amount transmittable within an asynchronous packet is variable depending on the size of the transmission buffer 302 of the digital interface 105 provided in the DVTR 103.

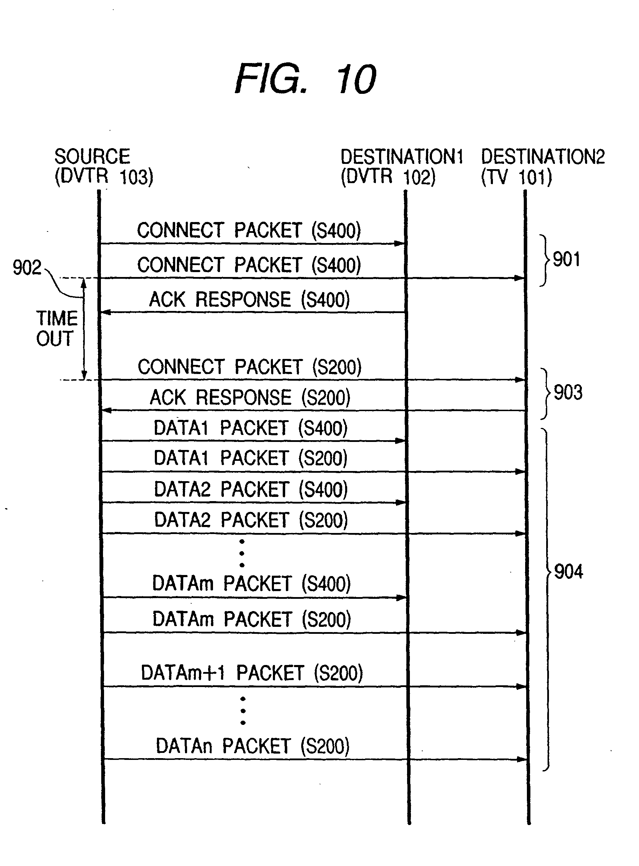

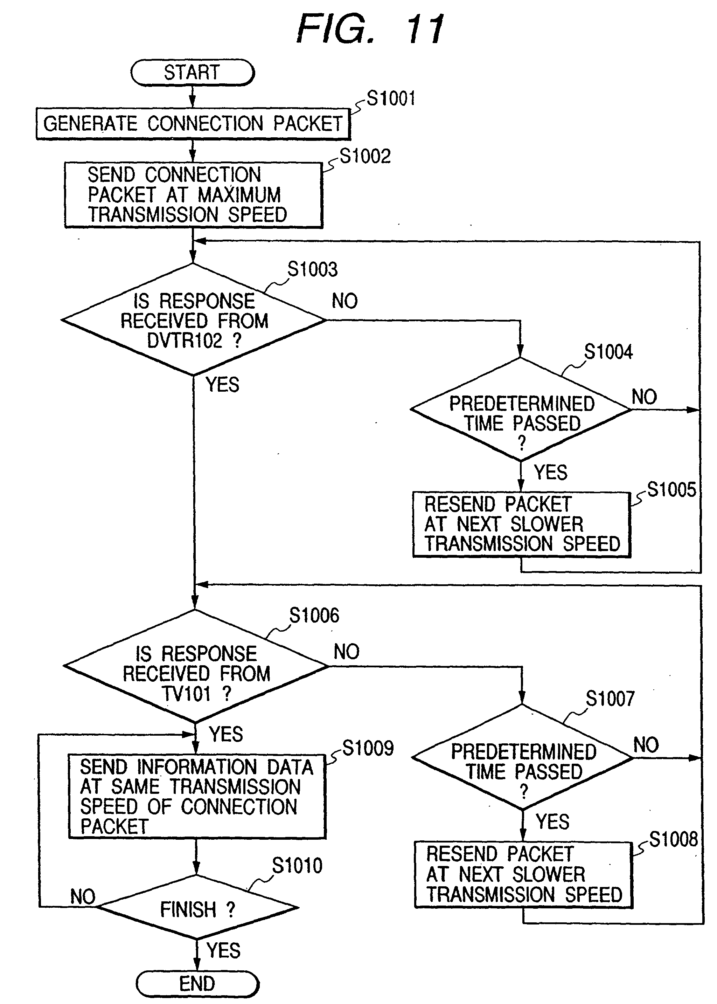

In the following there will be explained the communication sequence and the process sequence of the second embodiment with reference to Figs. 10 and 11.

Fig. 10 is a sequence chart showing an example of the communication sequence for analyzing the maximum transfer rate of the transmission path between the DVTR 103 and the destinations (TV 101 and DVTR 102). Also Fig. 11 is a flow chart showing the process sequence for analyzing the maximum transfer rate of the transmission path between the DVTR 103 and the destinations (TV 101 and DVTR 102).

In a step S1001, the source (DVTR 103) generates a connection packet, requesting acknowledgement from the first destination (DVTR 102) and the second destination (TV 101).

The connection packet of the second embodiment is so constructed as to contain, for example, dummy data, a command asking the ability of the destination (for example size of the reception buffer and information for setting the interval of the information data to be transmitted in succession from the source), and data for informing the ability of the source (for example the maximum payload size of the packet to be transmitted).

In a step S1002, the digital interface 105 of the source transmits the connection packet, with its maximum transfer rate (S400), to the destinations (sequence 901).

In steps S1003 and S1004, the source awaits, for a predetermined time, a response to the connection packet asynchronous transmitted to the DVTR 102 (sequence 902).

As in the first embodiment, the predetermined time is measured by the timer circuit 305 provided in the digital interface 105. Also the control circuit 306 detects the presence or absence of the response within the predetermined time, and supplies the control unit 107 with the result of detection.

If a response is not received from the DVTR 102 within the predetermined time, the digital interface 105 of the source transmits the connection packet with the next highest transfer rate (namely S200).

Thereafter the control unit 107 of the source awaits, in the steps S1003 and S1004, a response to the connection packet.

In the second embodiment, the above-mentioned predetermined time is adaptively varied according to the transfer rate used in the transmission of the connection packet.

In case a response is received from the DVTR 102 within the predetermined time, the control unit 107 of the source recognizes the used transfer rate (S200) as the maximum transfer rate effective on the transmission path to the DVTR 102. In the second embodiment, both the source and the DVTR 102 support S400, so that the source can transmit the above-mentioned information data at S400.

Also in case a response is received from the DVTR 102 within the above-mentioned predetermined time, the control unit 107 of the source recognizes the used transfer rate as the maximum transfer rate effective on the transmission path to the DVTR 102.

Then the source awaits, in steps S1006 and S1007, an acknowledgement responding to the transmitted connection packet from the remaining destination (namely TV 101) for a predetermined time (sequence 902).

If a response is received from the TV 101 within the predetermined time, the control unit 107 of the source recognizes the used transfer rate as the maximum transfer rate effective on the transmission path to the TV 101.

If a response is not received from the TV 101 within the predetermined time, the digital interface 105 of the source transmits the connection packet with a next highest transfer rate (namely S200) (sequence 903).

Thereafter the control unit 107 of the source awaits, in the steps S1006 and S1007, a response to the connection packet.

In case a response is received from the TV 101 within the predetermined time, the control unit 107 of the source recognizes the used transfer rate (S200) as the maximum transfer rate effective on the transmission path to the TV 101. In the second embodiment, the maximum transfer rate between the source and the TV 101 is S200.

After the recognition of the maximum transfer rate to each destination, the digital interface 105 of the source generates, from the same information data, plural asynchronous packets in plural kinds different in the information amount, based on the maximum transfer rate corresponding to each destination, and transmits such packets in succession (sequence 904).

In the second embodiment, the maximum transfer rate is S400 between the source and the destination 1 (DVTR 102) and S200 between the source and the destination 2 (TV 101). Consequently the asynchronous packets (DATA 1 to DATA m) transmitted to the destination 1 can send information of a doubled amount at maximum, in comparison with the asynchronous packets (DATA 1 to DATA n) transmitted to the destination 2, and can therefore be reduced to 1/2 in the number of packets.

After transmission of all the information data to the destinations, the source terminates the transmission of the information data in a step S1010.

Through such sequence, the source can easily recognize the maximum transfer rate in the transmission path between the source and each destination, without analyzing the transmission path to each destination and the transfer rates of the device present on such transmission path. Also it can execute asynchronous transfer of the information data individually to each destination, utilizing thus recognized maximum transfer rate.

In the second embodiment, in case the maximum transfer rate is different to the different destinations, plural asynchronous packets are generated, from the same information data, in plural sets different in the information amount and respectively corresponding to the respective maximum transfer rates, but such configuration is not restrictive.

For example, it is also possible to generate plural asynchronous packets according to the lowest one among the plural maximum transfer rates and to transmit such packets in succession to the destinations.

In such case same asynchronous packets can be transmitted to all the plural destinations, so that it is no longer required to generate the asynchronous packets of plural kinds from the information data and the burden of the source can thus be reduced.

Also in the second embodiment, even if the bus resetting is generated in the course of transmission of the information data, the source can reconfirm, as in the first embodiment, the maximum transfer rate to each destination without requiring the complex analysis.

In such case, after the predetermined process after the bus resetting, the source transmits the above-described connection packet with its maximum transfer rate. Thereafter the source executes the steps S1003 to S1008 in Fig. 10 until the maximum transfer rate to each destination is recognized.

After the recognition of the maximum transfer rate to each destination, the source executes transmission of the information data remaining after those properly received until immediately before the bus resetting is generated.

Though such procedure, the source can easily recognize, even in case of a bus resetting, the maximum transfer rates to the plural destinations without executing complex analysis. It can also re-start the asynchronous transfer, utilizing the maximum transfer rates thus recognized.

As explained in the foregoing, the second embodiment of the present invention allows to recognize the maximum transfer rate to each destination without requiring complex analysis.

### Third embodiment

In the second embodiment, there have been explained the procedure for identifying the maximum transfer rates between a source and plural destinations, and the procedure of data communication between the source and the plural destinations by the asynchronous transfer method.

In the third embodiment there will be explained the procedure of identifying the maximum transfer rates between a source and plural destinations and the procedure of executing data communication between a source and plural destinations by the isochronous transfer method.

In the following the third embodiment will be explained, as in the case of the second embodiment, by the communication system shown in Fig. 9.

In the third embodiment there will be explained a case in which the DVTR 103 functions as a source for transmitting information data (including video data and audio data) to plural destinations, while the TV 101 functions as a first destination for receiving and displaying such information data on the display unit 111 and the DVTR 102 functions as a second destination for receiving and recording the information data on a recording medium such as a magnetic tape set on the deck unit 112.

The signal processing unit 106 of the DVTR 103 divides the information data, to be transmitted to plural destinations, into at least a data segment of a predetermined data amount. Each segment data is packetized by the digital interface 105 of the DVTR 103 (more specifically the transmission/reception circuit 301 in the digital interface 105) into at least a communication packet based on the isochronous transfer method. In the following description, the communication packet based on the isochronous transfer method is called an isochronous packet.

The data amount of each segment data is variable, depending on the size of the reception buffer 303 secured at the destination. Thus the DVTR 103 of the third embodiment determines the data amount of the segment data, matching the smallest reception buffer size in the TV 101 and the DVTR 102.

Also the data amount transmittable in an isochronous packet is variable depending on the maximum transfer rate of the transmission path or on the size of the transmission buffer 302 provided in the DVTR 103.

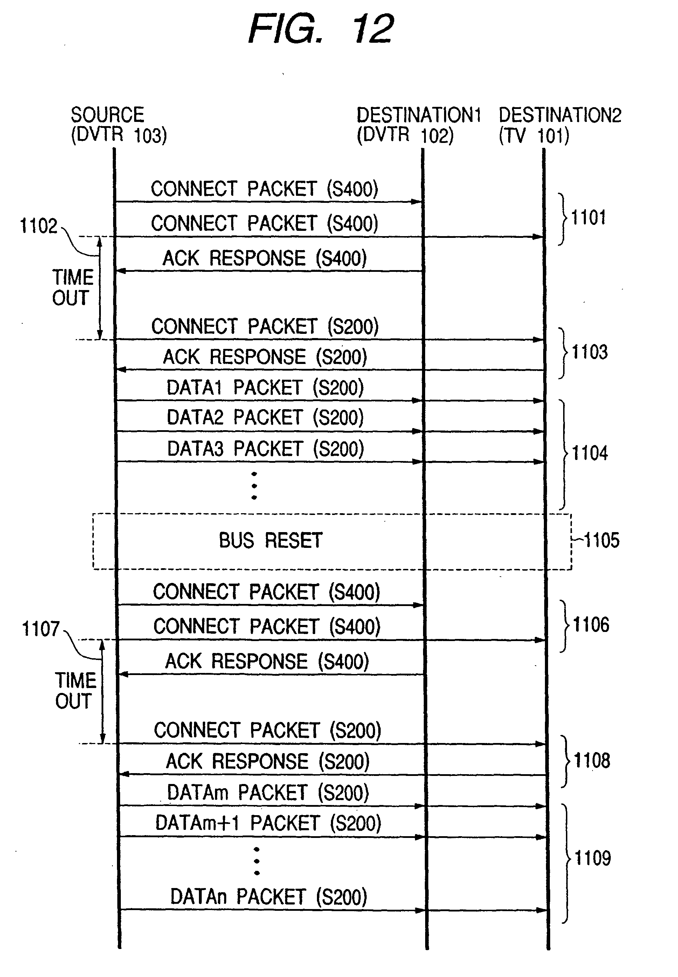

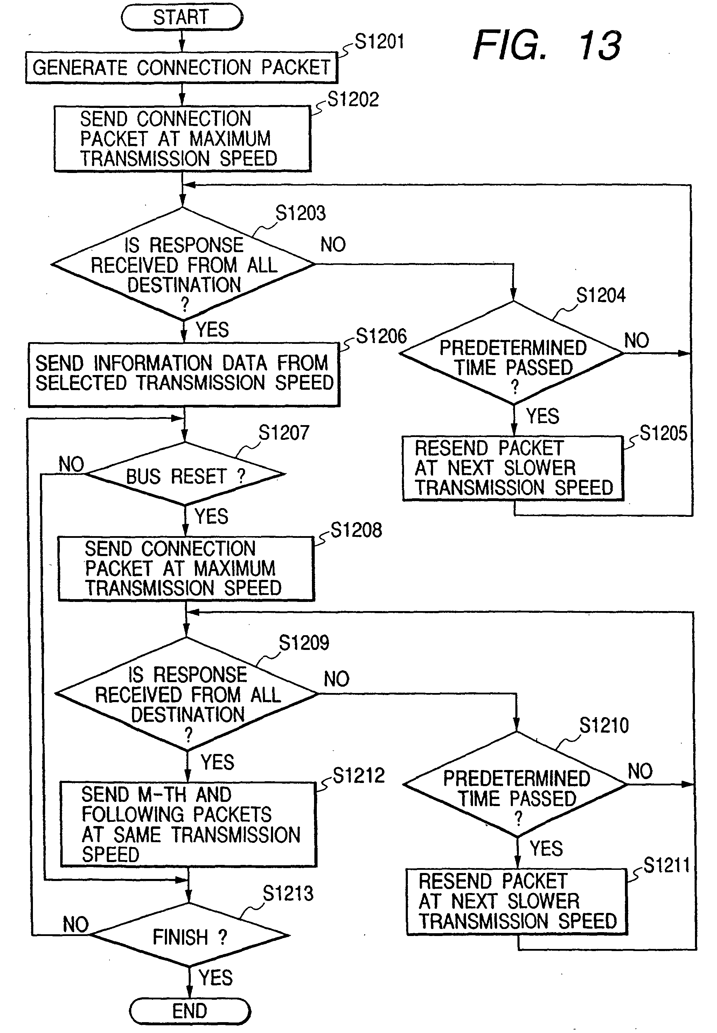

In the following there will be explained the communication sequence and the process sequence of the third embodiment with reference to Figs. 12 and 13.

Fig. 12 is a sequence chart showing an example of the communication sequence for analyzing the maximum transfer rate of the transmission path between the DVTR 103 and destinations (TV 101 and DVTR 102). Also Fig. 13 is a flow chart showing the process sequence for analyzing the maximum transfer rate of the transmission path between the DVTR 103 and the destinations (TV 101 and DVTR 102).

In a step S1201, the source (DVTR 103) generates a connection packet, requesting acknowledgement from the first destination (DVTR 102) and the second destination (TV 101).

The connection packet of the third embodiment is constructed with a format based on the asynchronous transfer method.

It is also so constructed as to contain, for example, dummy data, a command asking the ability of the destination (for example size of the reception buffer and information for setting the interval of the information data to be transmitted in succession from the source), data for informing the ability of the source (for example the maximum payload size of the packet to be transmitted), and a channel number assigned to the information data isochronous transferred by the source.

In a step S1202, the digital interface 105 of the source transmits the connection packet, with its maximum transfer rate (S400), to the destinations (sequence 1101).

In steps S1203 and S1204, the source awaits, for a predetermined time, a response to the connection packet asynchronous transmitted to all the destinations (sequence 1102).

As in the first embodiment, the predetermined time is measured by the timer circuit 305 provided in the digital interface 105. Also the control circuit 306 detects the presence or absence of the response within the predetermined time, and supplies the control unit 107 with the result of detection.

If a response is received from the destination within the predetermined time, the control unit 107 of the source recognizes the transfer rate of the response as the maximum transfer rate effective on the transmission path to the destination.

After recognizing the maximum transfer rates to the destinations, the control unit 107 of the source selects the lowest one of such maximum transfer rates.

In case the responses are not received from all the destinations within the predetermined time, the digital interface 105 of the source transmits, in a step S1205, the above-mentioned connection packet with a next highest transmission rate (namely S200) only to the destinations that have not responded (TV 101 in the third embodiment).

Thereafter the control unit 107 of the source awaits the response to the connection packet for the predetermined time.

If the response is received from the remaining destination within the predetermined time, the control unit 107 of the source recognizes the used transfer rate (namely S200) as the maximum transfer rate effective on the transmission path to such destination (sequence 1103).

After the maximum transfer rates to all the destinations are recognized by repeating the steps S1203 to S1205, the control unit 107 of the source selects, in a step S1206, the lowest one of such maximum transfer rates. Then the digital interface 105 of the source transmits in succession the plural isochronous packets, generated from the same information data, with thus selected transfer rate (sequence 1104).

In the third embodiment, the maximum transfer rate is S400 between the source and the destination 1 (DVTR 102), and S200 between the source and the destination 2 (TV 101) as shown in Fig. 12. Consequently the transfer rate selected by the source is S200, and the isochronous packets are broadcast with such transfer rate on the communication system.

In case a bus resetting is generated in a step S1207 for example by disconnection of the DVCR 104 in the course of communication between the source and the destinations, the digital interface 105 of the source interrupts the transmission of the isochronous packets, then initializes the topology and the node ID's prior to the bus resetting and executes the automatic recognition of the new topology and the node ID assignment to the nodes (sequence 1105).

The generation of the bus resetting is detected, as in the first embodiment, by the bus resetting detection circuit 304 provided in each digital interface 105. Also the predetermined process resulting from the bus resetting is controlled and executed by the control circuit 306 provided in the digital interface 105.

When the predetermined process resulting from the bus resetting is completed to prepare for restarting of the communication, the digital interface 105 of the source executes asynchronous transfer of the above-mentioned connection packet with its maximum transfer rate (namely S400) to the destinations (sequence 1106).

Then, in steps S1209 and S1210, the control unit 107 of the source awaits responses to the connection packet, asynchronous transferred to all the destinations, for a predetermined time (sequence 1107).

If a response is received from the destination within the predetermined time, the control unit 107 of the source recognizes the transfer rate of the response as the maximum transfer rate effective on the transmission path to the destination.

After recognizing the maximum transfer rates to the destinations, the control unit 107 of the source selects the lowest one of such maximum transfer rates.

In case the responses are not received from all the destinations within the predetermined time, the digital interface 105 of the source executes, in a step S1211, asynchronous transfer of the above-mentioned connection packet with a next highest transmission rate (namely S200) only to the destinations that have not responded (TV 101 in the third embodiment).

Thereafter the control unit 107 of the source awaits the response to the connection packet for the predetermined time.

If the response is received from the remaining destination within the predetermined time, the control unit 107 of the source recognizes the used transfer rate (namely S200) as the maximum transfer rate effective on the transmission path to such destination (sequence 1108).

After the maximum transfer rates to all the destinations are recognized by repeating the steps S1209 to S1211, the control unit 107 of the source selects, in a step S1212, the lowest one (S200 in the third embodiment) of such maximum transfer rates.

Then, in a step S1212, the digital interface 105 of the source transmits in succession the isochronous packets (DATA m to DATA n), succeeding to those normally received immediately before the bus resetting (sequence 1109).

After the completion of transmission of the last isochronous packet (DATA n) in the information data, the source terminates the transmission of the information data in a step S1213.

Through such procedure, the source can easily recognize the maximum transfer rate between the source and each destination, without analyzing the transmission path to each destination and the transfer rates of the devices present on such transmission path. It can also execute isochronous transfer of the same information data to the plural destinations, utilizing such transfer rate.

Also the source can easily recognize, even in case of a bus resetting, the maximum transfer rates between the source and each destination without executing complex analysis. It can also re-start the isochronous transfer, utilizing the maximum transfer rates thus recognized at the bus resetting.

As explained in the foregoing, the third embodiment of the present invention allows to easily recognize the maximum transfer rates to the destinations without executing complex analysis. Fourth embodiment

In the third embodiment there have been explained the procedure of identifying the maximum transfer rates between a source and plural destinations and the procedure of executing the data communication between a source and plural destinations by broadcast communication based on the isochronous transfer method.

On the other hand, in the fourth embodiment, there will be explained the procedure of identifying the maximum transfer rates between a source and plural destinations and the procedure of executing the data communication between a source and plural destinations by the asynchronous transfer method of broadcast type (hereinafter called asynchronous broadcasting transaction).

The fourth embodiment will be explained in the following by the communication system shown in Fig. 9, as in the case of the second embodiment.

In the fourth embodiment, there will be explained a case in which the DVTR 103 functions as a source for transmitting information data (including video data and audio data) to plural destinations, while the TV 101 functions as a first destination for receiving and displaying such information data on the display unit 111, the DVTR 102 functions as a second destination for receiving and recording such information data on a recording medium such as a magnetic tape set in the deck unit 112, and the DVTR 103 functions as a controller for setting the logical connection relationship between the source and the destinations.

The signal processing unit 106 of the DVTR 103 divides the information data, to be transmitted to plural destinations, into at least a data segment of a predetermined data amount. Each segment data is packetized by the digital interface 105 of the DVTR 103 (more specifically the transmission/reception circuit 301 in the digital interface 105) into at least a communication packet based on the asynchronous broadcast transaction method. In the following description, the communication packet based on the asynchronous broadcast transaction method is called an asynchronous broadcast packet.

The data amount of each segment data is variable, depending on the size of the reception buffer 303 secured at the destination. Thus the DVTR 103 of the fourth embodiment determines the data amount of the segment data, matching the smallest reception buffer size in the TV 101 and the DVTR 102.

Also the data amount transmittable in an asynchronous broadcast packet is variable, according to the maximum transfer rate of the transmission path or the size of the transmission buffer 302 provided in the DVTR 103.

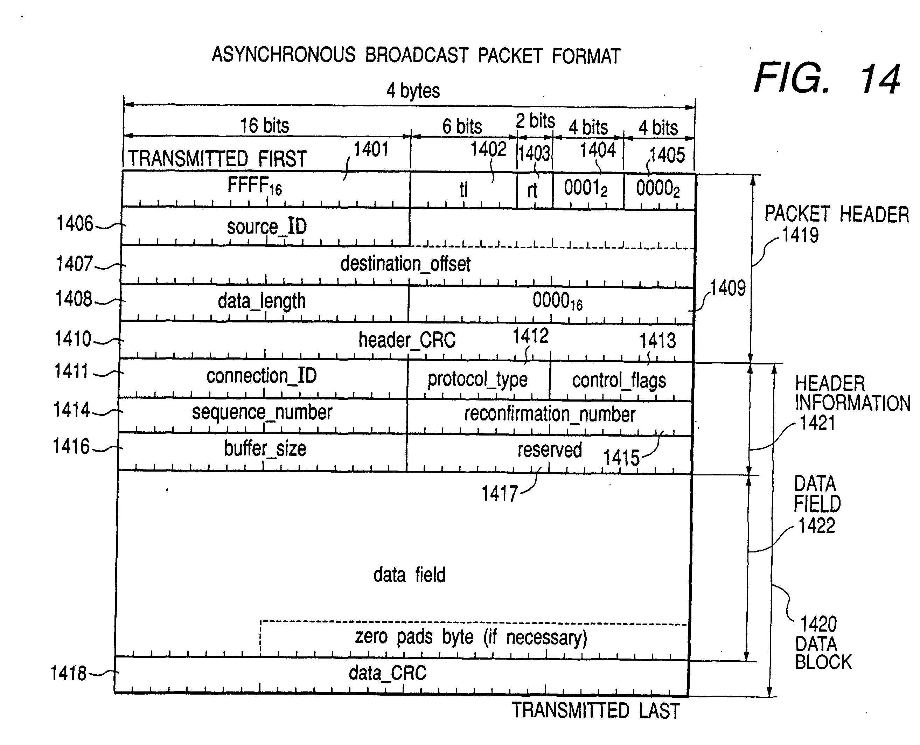

In the following there will be explained, with reference to Fig. 14, the configuration of the asynchronous broadcast packet employed in the fourth embodiment.

The asynchronous broadcast packet is a data packet based on the unit of a quadlet (4 bytes = 32 bits).

In the following there will be explained the configuration of a packet header 1419.

Referring to Fig. 14, a field 1401 (16 bits) indicates the destination ID which is the node ID of the destination. In the communication protocol of the present embodiment, in order to realize the asynchronous broadcast transaction, this field is set at a broadcasting ID (namely "FFFF₁₆").

A field 1402 (6 bits) is a transaction label field, indicating a tag specific to each transaction.

A field 1403 (2 bits) indicates a retry code, designating whether the packet executes a retry.

A field 1404 (4 bits) indicates a transaction code (tcode), which designates the format of the packet and the type of the transaction to be executed. In the present embodiment, this field is set for example at "0001₂", requesting a process (writing transaction) for writing a data block 1420 of the packet into an address space designated by a destination offset field 1407.

A field 1405 (4 bits) indicates priority (pri), designating the order of priority. In the present embodiment, this field is set at a value "0000₂".

A field 1406 (15 bits) indicates a source ID which is the node ID of the source.

A field 1407 (48 bits) indicates a destination offset, designating in common the lower 48 bits of the address spaces in the destination nodes 304.

A field 1408 (16 bits) indicates the data length, showing the length of a data field 1422 to be explained later, in the unit of byte.

A field 1409 (16 bits) indicates an extended tcode, having a value "0000₂" in the present embodiment.

A field 1410 (32 bits) is a header CRC, storing an error detection code for detecting the error in the above-described fields 1401 to 1409.

In the following there will be explained the configuration of a data block 1420. The data block 1420 is composed of a header information (packet information) 1421 and a data field 1422.

A field 1411 (16 bits) indicates a connection ID, storing for example a connection ID for identifying the logical connection relationship set between the source and the destination. Each digital interface 105 identifies the necessary packet based on the connection ID stored in this field.

The maximum settable number of the connections is 2¹⁶ x (number of nodes). In the present embodiment, therefore, there can be set plural connections until the total amount of the communication bands used by the connections reaches the capacity of the transmission paths.

A field 1412 (8 bits) indicates the protocol type, showing the communication procedure (namely the kind of communication protocol) based on the header information 1421. This field for example has a value "01₁₆" in case of indicating the communication protocol of the present embodiment.

A field 1413 (8 bits) indicates control flags, setting predetermined control data for controlling for example the communication procedure of the communication protocol of the present embodiment. In the present embodiment, the uppermost bit of this field constitutes, for example, a resend request flag. Therefore, the uppermost bit "1" of this field indicates a resend request based on the communication protocol of the present embodiment.

A field 1414 (16 bits) indicates a sequence number, set sequentially for the packet transferred according to a specified connection ID (designated by a field 511). The destination can monitor the continuity of the packet data transmitted in the asynchronous broadcast transaction, utilizing these sequence numbers. In case of a discontinuity, the destination can request resending based on the sequence number.

A field 1415 (16 bits) indicates a reconfirmation number. In the present embodiment, this field is significant only when the above-mentioned resend request flag is "1". When the resend request flag is "1", this field contains the sequence number of a packet for which the resending is requested.

A field 1416 (16 bits) indicates the buffer size, and stores the buffer size of the destination.

A field 1417 (16 bits) is a reversed field, which is reserved for the future use.

A field 1418 (32 bits) indicates a data CRC, storing, similar to the header CRC mentioned in the foregoing, an error detection code for detecting the error in the fields 1411 to 1417.

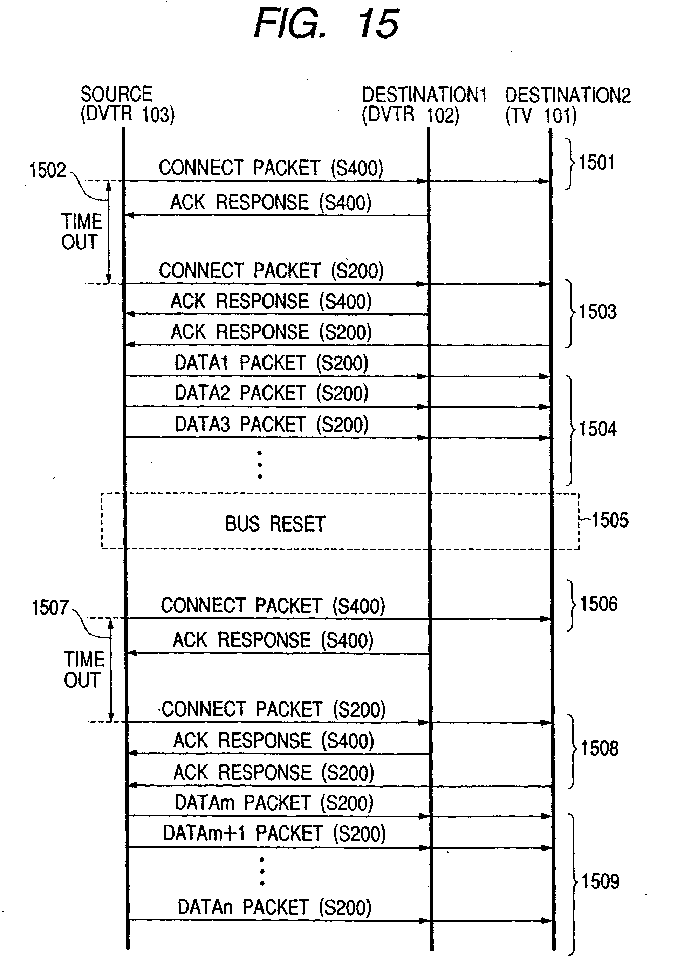

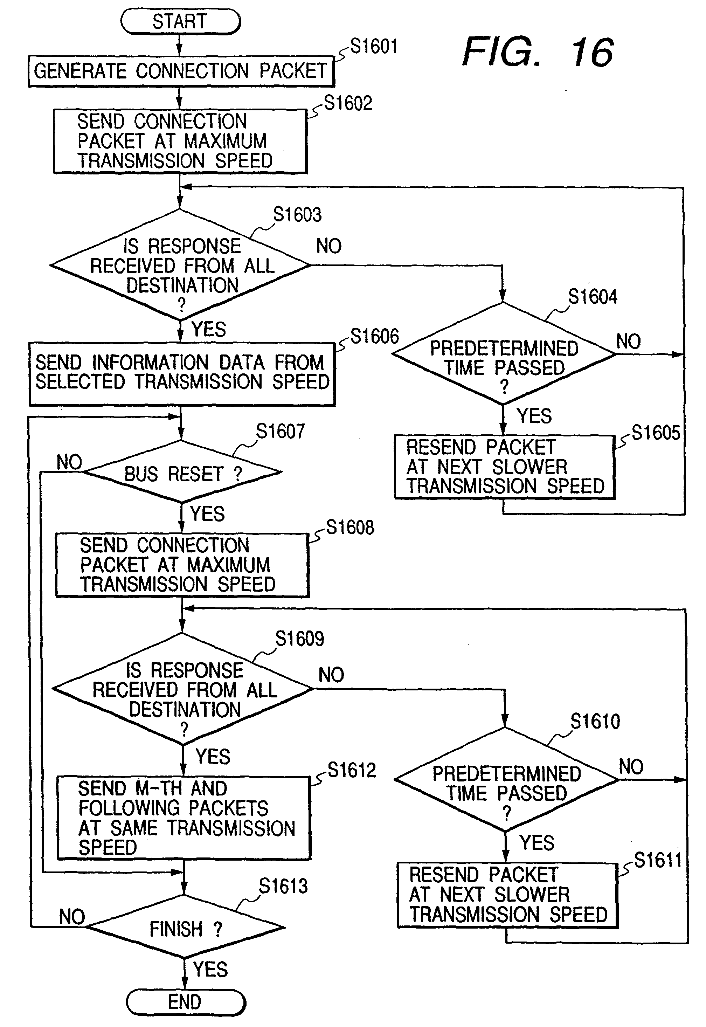

In the following there will be explained the communication sequence and the process sequence of the fourth embodiment with reference to Figs. 15 and 16.

Fig. 15 is a sequence chart showing an example of the communication sequence for analyzing the maximum transfer rates of the transmission paths between the DVTR 103 and destinations (TV 101 and DVTR 102). Also Fig. 16 is a flow chart showing the process sequence for analyzing the maximum transfer rates of the transmission paths between the DVTR 103 and the destinations (TV 101 and DVTR 102).

In a step S1601, the source (DVTR 103) generates a connection packet, requesting acknowledgement from the first destination (DVTR102) and the second destination (TV 101).

The connection packet of the fourth embodiment is composed of an asynchronous broadcast packet.

It is so constructed as to contain dummy data, a command asking the ability of the destination (for example size of the reception buffer and information for setting the interval of the information data to be transmitted in succession from the source), data for informing the ability of the source (for example the maximum payload size of the packet to be transmitted), and connection ID's set between the source and the plural destinations.

In a step S1602, the digital interface 105 of the source executes asynchronous broadcast transfer of the connection packet, with its maximum transfer rate (S400), to the destinations (sequence 1501).

In steps S1603 and S1604, the source awaits, for a predetermined time, responses to the connection packet asynchronous transmitted to all the destinations (sequence 1502).

If a response is received from the destination within the predetermined time, the control unit 107 of the source recognizes the transfer rate of the response as the maximum transfer rate effective to such destination.

In case the responses are not received from all the destinations within the predetermined time, the digital interface 105 of the source executes, in a step S1605, asynchronous broadcast transfer of the above-mentioned connection packet with a next highest transmission rate (namely S200).

Thereafter the control unit 107 of the source again awaits the response to the connection packet for the predetermined time.

If the responses are now received from all the destinations within the predetermined time, the control unit 107 of the source recognizes the used transfer rate (namely S200) as the maximum transfer rate (sequence 1503).

After the maximum transfer rates to all the destinations are recognized by repeating the steps S1603 to S1605, the digital interface 105 of the source transmits in succession the plural asynchronous broadcast packets, generated from the same information data, with such maximum transfer rate (sequence 1504).

In the fourth embodiment, the maximum transfer rate between the source and the destinations is S200 as shown in Fig. 12. Consequently the transfer rate selected by the source is S200, and the asynchronous broadcast packets are broadcast with such transfer rate on the communication system.

In case a bus resetting is generated in a step S1607 for example by disconnection of the DVCR 104 in the course of communication between the source and the destinations, the source interrupts the transmission of the asynchronous broadcast packets, then initializes the topology and the node ID's prior to the bus resetting and executes the automatic recognition of the topology and the node ID assignment to the nodes (sequence 1505).

When the predetermined process resulting from the bus resetting is completed to prepare for restarting of the communication, the digital interface 105 of the source executes asynchronous broadcast transfer of the above-mentioned connection packet with its maximum transfer rate (namely S400) to the destinations (sequence 1506).

Then, in steps S1609 and S1610, the control unit 107 of the source awaits responses to the connection packet from all the destinations. (sequence 1507).

If a response is received from the destination within the predetermined time, the control unit 107 of the source recognizes the transfer rate of the response as the maximum transfer rate effective on the transmission path to the destination.

In case the responses are not received from all the destinations within the predetermined time, the digital interface 105 of the source executes, in a step S1611, asynchronous broadcast transfer of the above-mentioned connection packet with a next highest transmission rate (namely S200).

Thereafter the control unit 107 of the source again awaits the response to the connection packet for the predetermined time.

If the responses are now received from all the destinations within the predetermined time, the control unit 107 of the source recognizes the used transfer rate (namely S200) as the maximum transfer rate (sequence 1508).

After the maximum transfer rates to all the destinations are recognized by repeating the steps S1609 to S1611, the digital interface 105 of the source transmits, in a step S1612, in succession the asynchronous broadcast packets (DATA m to DATA n), succeeding to those normally received immediately before the bus resetting, with such maximum transfer rates (sequence 1509).

After the completion of transmission of the last asynchronous broadcast packet (DATA n) in the information data, the source terminates the transmission of the information data in a step S1613.

Through such procedure, the source can easily recognize the maximum transfer rate between the source and each destination, without analyzing the transmission path to each destination and the transfer rates of the devices present on such transmission path. It can also execute asynchronous broadcast transfer of the same information data to the plural destinations, utilizing such transfer rate.

Also the source can easily recognize, even in case of a bus resetting, the maximum transfer rate between the source and each destination without executing complex analysis. It can also re-start the transfer of the information data, utilizing the maximum transfer rates thus recognized at the bus resetting.

As explained in the foregoing, the fourth embodiment of the present invention allows to easily recognize the maximum transfer rates to the destinations without executing complex analysis.

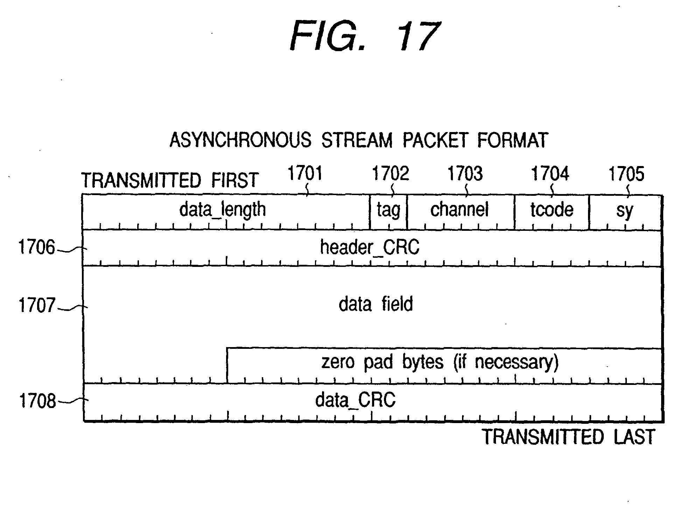

In the fourth embodiment, the transfer of the information data is executed with the asynchronous broadcast packet shown in Fig. 14, but such form is not restrictive. It is also possible, for example, to achieve the transfer with an asynchronous stream packet shown in Fig. 17.

In such case, the source divides the above-mentioned information data into at least a segment data, and generates, from each segment data, at least an asynchronous stream packet. The asynchronous stream packets are broadcast transferred in succession in the asynchronous transfer period. The format and the transfer method of the asynchronous stream packet are defined in the IEEE 1394.a standard, which is an extension of the IEEE 1394-1995 standard.

Referring to Fig. 17, a field 1701 (16 bits) is a data length field, storing data in the byte unit indicating the length of a data field 1707 to be explained later. A field 1702 (2 bits) is a tag field storing a value "00₂".

A field 1703 (6 bits) is a channel field, storing a channel number assigned to a series of the asynchronous stream packet including this packet. A field 1704 (4 bits) is a transaction code (tcode) field, storing a value "A₁₆" indicating an asynchronous stream packet.

A field 1705 (4 bits) is a synchronization code (sy) field, storing a control code determined by the application to be used. A field 1706 (32 bits) is a header CRC, storing an error detection code for detecting the error in the above-described fields 1701 to 1705.

A field 1707 (variable length) is a data field, storing the values of the fields 1411 to 1417 shown in Fig. 14 and a part of the segment data. In case the segment data stored in the field 1707 is not a multiple of quadlet, data "0" is filled in the deficit for the quadlet. A field 1708 (32 bits) is a data CRC, storing an error detection code for detecting the error in the field 1707 as in the case of the header CRC mentioned above.

### Other embodiments

The foregoing embodiments may also be realized in the following manner.

For example, it is also possible to supply the control unit (including a microcomputer) 107 provided in each device constituting the communication system of the embodiments, with a recording medium 108 storing the program codes of a software realizing the functions of the foregoing embodiments.

The embodiments of the present invention can also be realized by a configuration in which the control unit 107 reads the program codes stored in the recording medium 108 and so controls the functions of the devices or the entire communication system as to realize the functions of the embodiments.

More specifically, it is possible to supply the control unit 107 provided in the devices 101 to 104 with a recording medium 108 storing the program codes which realize the process and functions shown in Figs. 4, 6 and 8 in the first embodiment, Fig. 10 in the second embodiment, Fig. 12 in the third embodiment or Fig. 15 in the fourth embodiment, and cause the control unit 107 to read the program codes stored in the recording medium 108 and to control the communications among the devices shown in Fig. 1 so as to realize the functions of each embodiment.

In such case, the program codes themselves read from the recording medium 108 realize the functions of the foregoing embodiments, and the recording medium storing such program codes constitutes a part of the present invention.

The recording medium 108 for supplying the program codes can be composed, for example, of a floppy disk, a hard disk, an optical disk, a magnetooptical disk, a CD-ROM, a CD-R, a magnetic tape, a non-volatile memory card or a ROM.

Furthermore, the program codes of the software realizing the functions of the foregoing embodiments may be recorded in advance on the recording medium 108 or may be supplied from the exterior through the digital interface 105 and recorded on the recording medium 108.

The present invention also includes a case where an operating system or an application software functioning on the control unit 107 controls the functions of the communication system or apparatus of the foregoing embodiments under the instructions of the program codes read from the recording medium 108, thereby realizing the functions of the aforementioned embodiments.

The present invention further includes a case wherein the supplied program codes are once stored in a memory provided in a function expansion board or a function expansion unit connected to the control unit 107, and the control unit provided in the function expansion board or the function expansion unit controls the functions of the communication system or apparatus of the present invention under the instruction of such program codes thereby realizing the functions of the aforementioned embodiments.

The invention may be embodied in other specific forms within the scope of the appended claims.

The foregoing embodiments have been explained by communication systems constructed with the digital interfaces 105 based on the IEEE 1394 standard, but such configurations are not restrictive. For example, the present invention is likewise applicable to a communication system constructed with digital interfaces capable of supporting plural different data transfer rates as in the case of the IEEE 1394 standard, or a bus-type network system capable of accommodating plural devices of different maximum data transfer rates.

Therefore, the above-mentioned embodiments are merely examples in all respects and must not be construed to limit the invention.

The scope of the present invention is defined by the scope of the appended claims, and is not limited at all by the specific description of this specification. Furthermore, all the modifications and changes belonging to equivalents of the claims are considered to fall within the scope of the present invention.

## Claims

1. communication apparatus connectable to a plurality of destination apparatuses, said data communication apparatus, comprising:
transmission means (105) having a plurality of different transfer rates a capable of transmitting packets of data at one of the plurality of different transfer rates to the plurality of destination apparatuses;
and **characterised by**
control means (107) for determining the maximum transfer rate between said apparatus and all of said plurality of destination apparatuses on the basis of a response from each of the destination apparatuses to a predetermined packet.

2. Apparatus according to claim 1, wherein said transmission means is adapted to send said predetermined packet at its maximum transfer rate, and is adapted to retransmit said predetermined packet at a lower transfer rate if there is no response from a destination apparatus.

3. Apparatus according to claim 2 and including timing means (305) for timing if a response is received from each destination apparatus with a predetermined interval.

4. Apparatus according to claim 3, wherein said control means are adapted to vary increase said predetermined interval as the transfer rate is reduced.

5. Apparatus according to any preceding claim, wherein the data content of each packet is varied in accordance with the rate at which the packet is to be transferred.

6. Apparatus according to any preceding claim wherein said transmission means is adapted to transfer said predetermined packet so that it includes data representing a request for each destination apparatus to send a response identifying its communication capabilities.

7. Apparatus according to any one of the preceding claims, wherein said predetermined packet includes data defining the communication capabilities of said apparatus.

8. Apparatus according to any one of the preceding claims, wherein said predetermined packet includes a connection ID indicating a logical connection relationship between said apparatus and all of said plurality of destination apparatuses.

9. Apparatus according to any one of the preceding claims, wherein said transmission means (105) conform to IEEE 1394 standard.

10. A data communication method of providing communication between a source apparatus and a plurality of destination apparatuses, wherein said source apparatus has transmission means (105) having a plurality of different transfer rates and capable of transmitting packets of data at one of the plurality of different transfer rates to the plurality of destination apparatuses;
and **characterised by**
determining the maximum transfer rate between said source apparatus and all of said plurality of destination apparatuses on the basis of a response from each of said plurality of destination apparatuses to a predetermined packet.

11. A method according to claim 10, wherein said transmission means sends said predetermined packet at its maximum transfer rate, and is adapted to retransmits said predetermined packet at a lower transfer rate if there is no response from a destination apparatus.

12. A method according to claim 11 and including timing if a response is received from each destination apparatus with a predetermined interval.

13. A method according to claim 12, wherein said predetermined interval is increased as the transfer rate is reduced.

14. A method according to any one of claims 10 to 13, wherein the data content of each packet is varied in accordance with the rate at which the packet is to be transferred.

15. A method according to any one of claims 10 to 14 wherein said transmission means transfers said predetermined packet so that it includes data representing a request for each destination apparatus to send a response identifying its communication capabilities.

16. A method according to any one of claims 10 to 15, wherein said predetermined packet includes data defining the communication capabilities of said source apparatus.

17. A method according to any one of claims 10 to 16, wherein said predetermined packet includes a connection ID indicating a logical connection relationship between said source apparatus and all of said plurality of destination apparatuses.

18. A method according to any one of claims 10 to 17, wherein said transmission means (105) conform to IEEE 1394 standard.

19. A storage medium storing processor implementable instructions for controlling an electronic processor to carry out all of the steps of the method of any one of claims 10 to 18.

## Patentansprüche

1. Datenkommunikationsvorrichtung, die mit einer Vielzahl von Zielortvorrichtungen verbindbar ist, mit
einer Übertragungseinrichtung (105), die eine Vielzahl von verschiedenen Übertragungsraten aufweist, und die in der Lage ist, Pakete von Daten mit einer der Vielzahl von verschiedenen Übertragungsraten an die Vielzahl von Zielortvorrichtungen zu übertragen,
**gekennzeichnet durch**
eine Steuereinrichtung (107) zur Bestimmung einer maximalen Übertragungsrate zwischen der Vorrichtung und allen der Vielzahl von Zielortvorrichtungen auf der Grundlage einer Antwort von jeder der Zielortvorrichtungen auf ein vorbestimmtes Paket.

2. Vorrichtung nach Anspruch 1, wobei die Übertragungseinrichtung dahingehend ausgestaltet ist, um das vorbestimmte Paket mit seiner maximalen übertragungsrate zu senden, und dahingehend ausgestaltet ist, um das vorbestimmte Paket mit einer niedrigeren Übertragungsrate erneut zu senden, wenn von einer Zielortvorrichtung keine Antwort vorhanden ist.

3. Vorrichtung nach Anspruch 2 und mit einer Zeitgebungseinrichtung (305) zur Zeitgebung, wenn eine Antwort von jeder Zielortvorrichtung mit einem vorbestimmten Intervall empfangen wird.

4. Vorrichtung nach Anspruch 3, wobei die Steuereinrichtung dahingehend ausgestaltet ist, um das vorbestimmte Intervall zu variieren erhöhen, wenn die Übertragungsrate reduziert wird.

5. Vorrichtung nach einem der voranstehenden Ansprüche, wobei der Dateninhalt jedes Pakets gemäß der Rate variiert wird, mit welcher das Paket zu übertragen ist.

6. Vorrichtung nach einem der voranstehenden Ansprüche, wobei die Übertragungseinrichtung dahingehend ausgestaltet ist, um das vorbestimmte Paket derart zu übertragen, dass es Daten umfasst, die eine Anforderung für jede Zielortvorrichtung repräsentieren, eine ihre Kommunikationsbefähigungen identifizierende Antwort zu senden.

7. Vorrichtung nach einem der voranstehenden Ansprüche, wobei das vorbestimmte Paket Daten umfasst, welche die Kommunikationsbefähigungen der Vorrichtung definieren.

8. Vorrichtung nach einem der voranstehenden Ansprüche, wobei das vorbestimmte Paket eine Verbindungs-ID umfasst, welche eine logische Verbindungsbeziehung zwischen der Vorrichtung und allen der Vielzahl der Zielortvorrichtungen anzeigt.

9. Vorrichtung nach einem der voranstehenden Ansprüche, wobei die Übertragungseinrichtung (105) dem IEEE 1394 Standard entspricht.

10. Datenkommunikationsverfahren des zur Verfügung Stellens einer Kommunikation zwischen einer Quellenvorrichtung und einer Vielzahl von Zielortvorrichtungen, wobei die Quellenvorrichtung eine Übertragungsvorrichtung (105) aufweist, die eine Vielzahl von verschiedenen Übertragungsraten aufweist, und die in der Lage ist, Pakete von Daten mit einer der Vielzahl von verschiedenen Übertragungsraten zu der Vielzahl von Zielortvorrichtungen zu übertragen,
**gekennzeichnet durch**
Bestimmen einer maximalen Übertragungsrate zwischen der Quellenvorrichtung und allen der Vielzahl von Zielortvorrichtungen auf der Grundlage einer Antwort von jeder der Vielzahl von Zielortvorrichtungen auf ein vorbestimmtes Paket.

11. Verfahren nach Anspruch 10, wobei die Übertragungseinrichtung das vorbestimmte Paket bei seiner maximalen Übertragungsrate sendet, und dahingehend ausgestaltet ist, um das vorbestimmte Paket mit einer niedrigeren Übertragungsrate erneut zu senden, wenn von einer Zielortvorrichtung keine Antwort vorhanden ist.

12. Verfahren nach Anspruch 11 und mit einem Zeitgeben, wenn eine Antwort von jeder Zielortvorrichtung mit einem vorbestimmten Intervall empfangen wird.

13. Verfahren nach Anspruch 12, wobei das vorbestimmte Intervall erhöht wird, wenn die Übertragungsrate reduziert wird.

14. Verfahren nach einem Ansprüche 10 bis 13, wobei der Dateninhalt jedes Pakets gemäß der Rate variiert wird, mit welcher das Paket zu übertragen ist.

15. Verfahren nach einem der Ansprüche 10 bis 14, wobei die Übertragungseinrichtung das vorbestimmte Paket derart überträgt, dass es Daten umfasst, die eine Anforderung für jede Zielortyorrichtung repräsentieren, eine ihre Kommunikationsbefähigungen identifizierende Antwort zu senden.

16. Verfahren nach einem der Ansprüche 10 bis 15, wobei das vorbestimmte Paket Daten umfasst, welche die Kommunikationsbefähigungen der Quellenvorrichtung definieren.

17. Verfahren nach einem der Ansprüche 10 bis 16, wobei das vorbestimmte Paket eine Verbindungs-ID umfasst, welche eine logische Verbindungsbeziehung zwischen der Quellenvorrichtung und allen der Vielzahl von Zielortvorrichtungen anzeigt.

18. Verfahren nach einem der Ansprüche 10 bis 17, wobei die Übertragungseinrichtung (105) dem IEEE 1394 Standard entspricht.

19. Speichermedium, welches von einer Verarbeitungseinrichtung ausführbare Anweisungen zur Steuerung einer elektronischen Verarbeitungseinrichtung speichert, um alle Schritte des Verfahrens nach einem der Anspruche 10 bis 18 auszuführen.

## Revendications

1. Appareil de communication de données pouvant être connecté à une pluralité d'appareils destinataires, ledit appareil de communication de données comportant :
un moyen de transmission (105) ayant une pluralité de différents débits de transfert et capable de transmettre des paquets de données à l'un de la pluralité des différents débits de transfert à la pluralité d'appareils destinataires ;
et **caractérisé par**
un moyen de commande (107) destiné à déterminer un débit maximal de transfert entre ledit appareil et la totalité de ladite pluralité d'appareils destinataires sur la base d'une réponse en provenance de chacun des appareils destinataires à un paquet prédéterminé.

2. Appareil selon la revendication 1, dans lequel ledit moyen de transmission est conçu pour envoyer ledit paquet prédéterminé à son débit maximal de transfert, et est conçu pour retransmettre ledit,paquet.prédéterminé à un débit de transfert inférieur s'il n'y a aucune réponse en provenance d'un appareil destinataire.

3. Appareil selon la revendication 2 et comprenant un moyen (305) destiné à établir une temporisation si une réponse est reçue de chaque appareil destinataire avec un intervalle prédéterminé.

4. Appareil selon la revendication 3, dans lequel ledit moyen de commande est conçu pour faire varier l'accroissement dudit intervalle.prédéterminé en même temps que le débit de transfert diminue.

5. Appareil selon l'une quelconque des revendications précédentes, dans lequel le contenu des données de chaque paquet est modifié en fonction du débit auquel le paquet doit être transféré.

6. Appareil selon l'une quelconque des revendications précédentes, dans lequel ledit moyen de transmission est conçu pour transférer ledit paquet prédéterminé afin qu'il comprenne des données représentant une demande adressée à chaque appareil destinataire pour qu'il envoie une réponse identifiant ses capacités de communication.

7. Appareil selon l'une quelconque des revendications précédentes, dans lequel ledit paquet prédéterminé comprend des données définissant les capacités de communication dudit appareil.

8. Appareil selon l'une quelconque des revendications précédentes, dans lequel ledit paquet prédéterminé comprend un ID de connexion indiquant une relation de connexion logique entre ledit appareil et la totalité de ladite pluralité d'appareils destinataires.

9. Appareil selon l'une quelconque des revendications précédentes, dans lequel ledit moyen de transmission (105) est conforme à la norme IEE 1394.

10. Procédé de communication de données établissant une communication entre un appareil source et une pluralité d'appareils destinataires, dans lequel ledit appareil source comporte un moyen de transmission (105) ayant une pluralité de différents débits de transfert et capable de transmettre des paquets de données à l'un de la pluralité de différents débits de transfert à la pluralité d'appareils destinataires ;
et **caractérisé par**
la détermination d'un débit maximal de transfert entre ledit appareil source et ladite totalité de ladite pluralité d'appareils destinataires sur la base d'une réponse en provenance de chacun de ladite pluralité d'appareils destinataires à un paquet prédéterminé.

11. Procédé selon la revendication 10, dans lequel ledit moyen de transmission envoie ledit paquet prédéterminé à son débit maximal de transfert, et est conçu pour retransmettre ledit paquet prédéterminé à un débit de transfert inférieur s'il n'y a aucune réponse en provenance d'un appareil destinataire.

12. Procédé selon la revendication 11 et comprenant une temporisation si une réponse est reçue de chaque appareil destinataire avec un intervalle prédéterminé.

13. Procédé selon la revendication 12, dans lequel ledit intervalle prédéterminé est augmenté en même temps que le débit de transfert diminue.

14. Procédé selon l'une quelconque des revendications 10 à 13, dans lequel le contenu des données de chaque paquet est modifié en fonction du débit auquel le paquet doit être transféré.

15. Procédé selon l'une quelconque des revendications 10 à 14, dans lequel ledit moyen de transmission transfère ledit paquet prédéterminé afin qu'il comprenne des données représentant une demande pour chaque appareil destinataire d'envoyer une réponse identifiant ses capacités de communication.

16. Procédé selon l'une quelconque des revendications 10 à 15, dans lequel ledit paquet prédéterminé comprend des données définissant les capacités de communication dudit appareil source.

17. Procédé selon l'une quelconque des revendications 10 à 16, dans lequel ledit paquet prédéterminé comprend un ID de connexion indiquant une relation de connexion logique entre ledit appareil source et la totalité de ladite pluralité d'appareils destinataires.

18. Procédé selon l'une quelconque des revendications 10 à 17, dans lequel ledit moyen de transmission (105) est conforme à la norme IEE 1394.

19. Support de stockage stockant des instructions exécutables par processeur pour commander un processeur électronique afin qu'il exécute la totalité des étapes du procédé selon l'une quelconque des revendications 10 à 18.
